# EUROPEAN PATENT APPLICATION

(11) **EP 0 973 277 A2**
(43) Date of publication of application: **19.01.2000**
(21) Application number: 99305358.6
(22) Date of filing: 06.07.1999
(51) Int. Cl.: H04B 10/155

(54) **Optical communications system with simultaneous wavelength locking and spectral filtering**

(30) Priority: 17.07.1998 US 118705
(71) Applicant: LUCENT TECHNOLOGIES INC., Murray Hill, New Jersey 07974-0636 (US)
(72) Inventor: Eng, Lars E., Upper Macungie, Pennsylvania 18051 (US); Kazarinov, Rudolf Feodor, Bethlehem, Pennsylvania 18015 (US); Shtengel, Gleb E., Upper Milford Township, Pennsyl. 18049 (US)
(74) Representative: Watts, Christopher Malcolm Kelway, Dr.

(57) **Abstract**

In accordance with the invention, an optical communications system is provided with a light source comprising a semiconductor laser whose wavelength is locked by a spectrally selective element and whose output is simultaneously filtered by the same element. The result is a source output suitable for longer distance transmission and higher speed transmission. An exemplary embodiment using a fiber Bragg grating as the simultaneous selective element provides chirp reduction, increased extinction ratio andabsolute wavelength stability within 2 pm.

## Description

### Field Of The Invention

This invention concerns optical communications systems and, in particular, optical communications systems providing simultaneous wavelength locking and spectral filtering at the optical source.

### Background Of The Invention

Commercial use of WDM systems has been growing rapidly over recent years. Standard WDM systems operate in a 30 nm window about 1.55µm. High-speed optical data transmission over long distances is limited by dispersion in the fiber. This limitation imposes stringent requirements on the quality of the transmitted optical signal. Instantaneous wavelength variation (chirp) should be minimized while the ratio of the ON-state level to OFF-state level (extinction ratio) should be maximized.

Direct modulation of a semiconductor laser source is the simplest modulation technique. However, such lasers are prone to substantial wavelength chirp. Also high extinction ratio is difficult to achieve without adverse relaxation oscillations.

The conventional solution for producing a low chirp optical source is external modulation of the laser radiation. This can be realized using external LiNbO₃ modulator or a semiconductor electroabsorption modulator. External modulators, however, are very expensive.

A possible alternative solution is optical filtering of the directly modulated semiconductor laser. When the radiation of the semiconductor laser is passed through a narrow-band optical filter, the chirp is reduced and the extinction ratio is increased. However, this scheme relies on the precise relative spectral positions of the spectral filter and laser wavelength. Without a wavelength locking mechanism stable operation is not possible. Accordingly there is a need for a system with simultaneous wavelength locking and spectral filtering.

### Summary Of The Invention

In accordance with the invention, an optical communications system is provided with a light source comprising a semiconductor laser whose wavelength is locked by a spectrally selective element and whose output is simultaneously filtered by the same element. The result is a source output suitable for longer distance transmission and higher speed transmission. An exemplary embodiment using a fiber Bragg grating as the simultaneous selective element provides chirp reduction, increased extinction ratio and absolute wavelength stability within 2 pm.

### Brief Description Of The Drawings

The nature, advantages and various additional features of the invention will appear more fully upon consideration of the illustrative embodiments now to be described in detail. In the accompanying drawings:
Fig. 1 is a schematic block diagram of an optical communications system in accordance with the invention;
Fig. 2 illustrates a preferred form of the system of Fig. 1; and
Figs. 3-10 are graphical illustrations showing the performance of the Fig. 2 system.

### Detailed Description

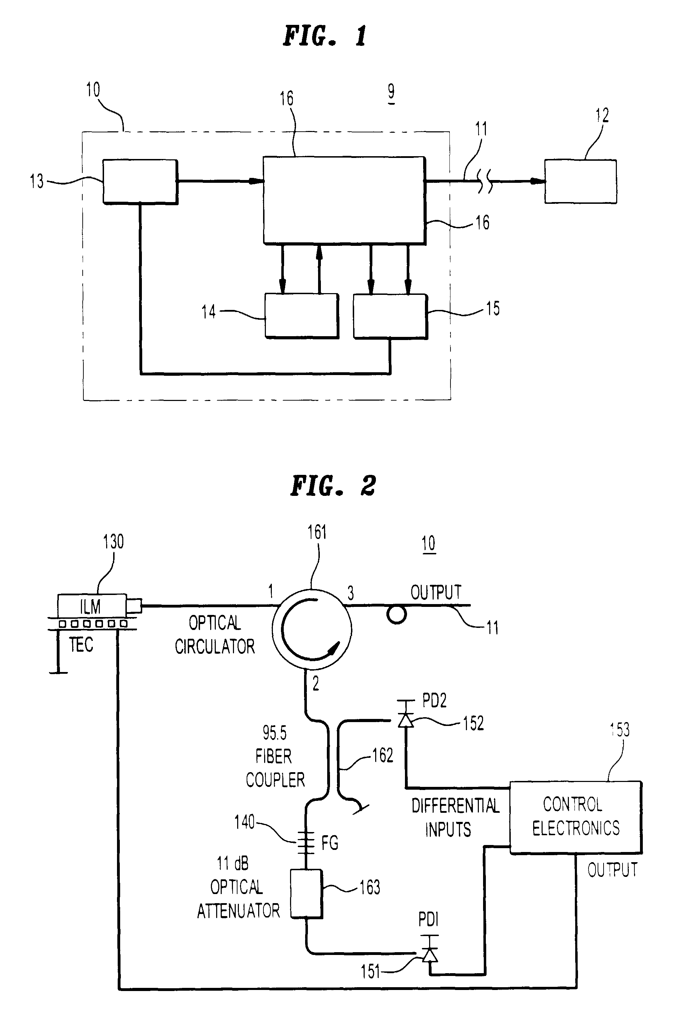

Referring to the drawings, Fig. 1 schematically illustrates an optical communications system 9 including an improved optical source 10 providing essentially simultaneous wavelength locking and spectral filtering. The system includes a transmission path 11 and a remote receiver 12.

The source 10, in essence, comprises a controllable wavelength laser 13 whose wavelength can be adjusted by an electrical signal, a spectrally selective element 14 for receiving the optical output of laser 13 and separating it into a first component within a selected spectral region and a second component spectrally outside the selected region. Electrical circuitry 15 is provided for detecting the first and second spectral components and providing a feedback signal based thereon to the laser 13, and optical circuitry 16 is provided for directing output of laser 13 to the selective element 14 for directing portions of the two output components of element 14 to circuitry 15 and for directing the selected spectral component to transmission path 11.

The laser 13 is preferably a semiconductor laser, and the transmission path 11 is preferably an optical fiber. The spectrally selective element 14 can be any spectrally selective element such as a Bragg grating, a Fabry-Perot resonant cavity or a Mach-Zehnder interferometer. The electrical circuitry can comprise photodetectors and a differential amplifier, and the optical circuitry conveniently comprises an optical circulator.

In operation, the laser output is split by the selective element into desired and undesired wavelength components. The detected difference in the levels of these two signals is used to adjust the wavelength of the laser while the desired component from the selective element is transmitted. The result is a signal of increased extinction ratio, reduced chirp, and enhanced wavelength stability.

The nature and operation of the invention can be more clearly understood by consideration of the following specific embodiment.

### Example 1

In the exemplary embodiment shown in Fig. 2, the laser is an isolated DFB laser module 130, e.g. a standard Lucent Technologies Laser 2000 (D2525). It has a threshold of 9.3mA and peak wavelength of 1542.41nm at 25C. A thermoelectric cooler and thermistor inside the module package assembly allows control and monitoring of the laser chip temperature. The laser module has a standard single mode fiber output which was connected to port 1 of a 3-port optical circulator 161 (JDS-Fitel model CR2500-FA). The insertion loss is ~1dB between ports 1-2 and 2-3 with isolation ~50dB and directivity of 63dB. Port 2 of the circulator 161 is connected to a 95.5 fiber coupler 162 with low polarization dependent loss. The output of the same branch of the fiber coupler is followed by a fiber Bragg grating 140 and an optical attenuator 163. The output of the optical attenuator is connected to photodetector 151 and provides one of the signals for the differential wavelength stabilization scheme. 95% of the light reflected from the grating 140 goes back into the port 2 of the circulator 161, and 5% of it is coupled into the second photodetector 152 which gives the second signal for the wavelength stabilization scheme. Both photodetectors are standard Lucent Technologies In GaAs pin detectors (128C3) with low back reflection.

The optical signal reflected by grating 140 into port 2 of circulator 161 provides the useful output at the port 3. The outputs from photodetectors 151 and 152 working in the photovoltaic regime are connected to the positive and negative inputs of a differential amplifier 153. The difference between the signals from two photodetectors is the error signal, which is integrated by a current booster amplifier to drive a low-resistance output (the thermo-electric cooler in the laser module 130).

In this electrical circuit, the rate of charge of the drive voltage (current) through the thermoelectric cooler is proportional to the error signal. Therefore, the condition of the error signal being equal to zero is the point of stable operation. The scheme provides locking of the laser wavelength to the wavelength at which the error signal is equal to zero. The optical attenuator 163 is needed to balance the level of the optical signal at photodector 151. The use of a variable optical attenuator gives additional flexibility for fine-tuning the laser wavelength within the reflection band of the grating.

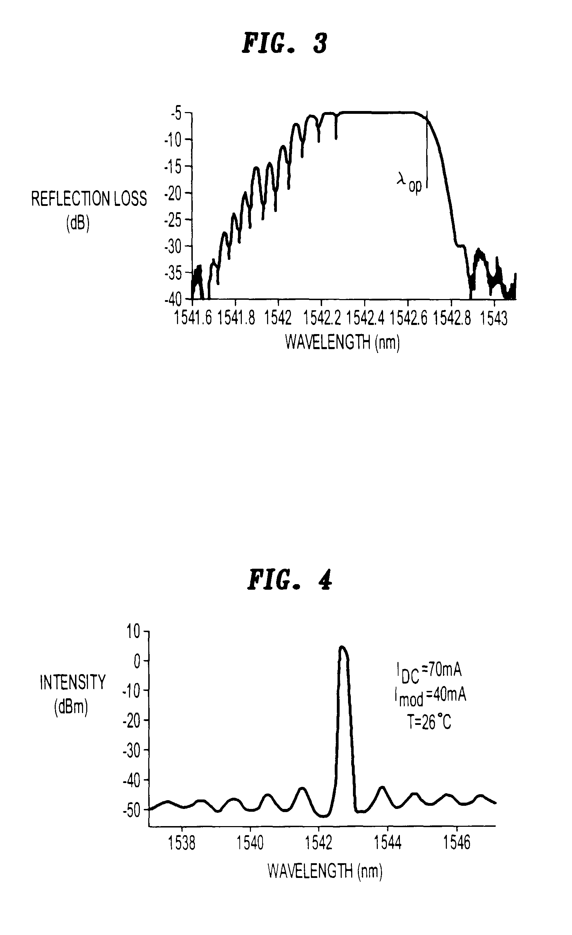

The reflection spectrum of the fiber grating 140 is shown in Fig. 3. It was recorded in the same optical scheme as shown in Fig. 2. The laser module was replaced with tunable external cavity laser, and while its wavelength was swept across the reflection band, the output power was recorded at the output end. Loss in the center of the reflection band is about 5dB, which includes 2dB in OC, 0.5dB in the fiber coupler and ~1.5dB in connectors.

The wavelength stabilization scheme is adjusted so that the laser wavelength is locked at the wavelength indicated as λₒₚ. At this wavelength the reflectivity of the grating has a steep slope (14dB/A) which provides an efficient FM-AM conversion of the laser radiation. The total optical loss in this configuration was about 8dB (including 2dB in OC, 0.5dB in fiber coupler and 1.5 dB in connectors). The laser operated at 70mA DC, and the output power was -1dBm.

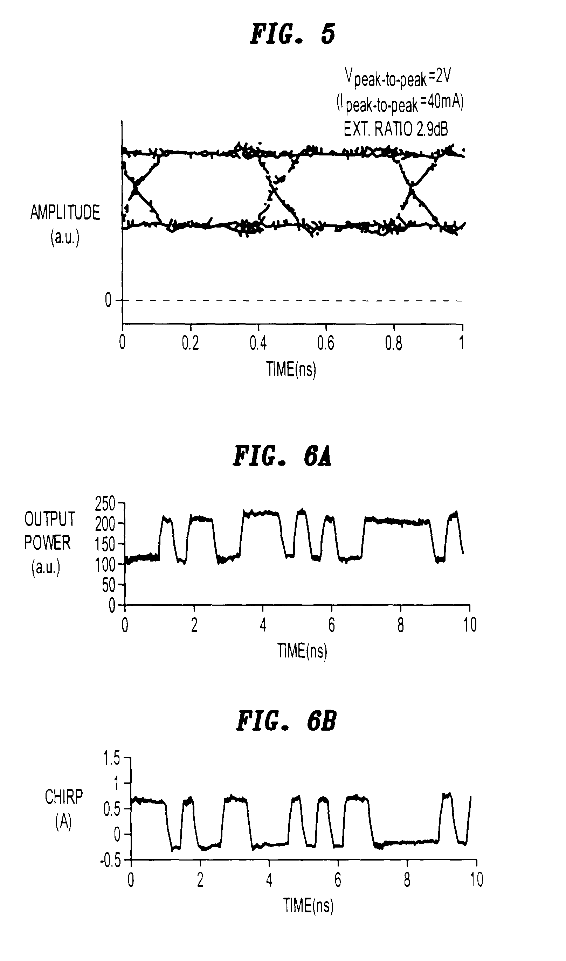

The optical spectrum of the standalone laser module under 2.5Gb/s modulation is shown in the Fig. 4. The modulation amplitude is 2V peak-to-peak. The module has a series resistance of 50Ω(matching resistor is connected in series with a laser diode). Therefore the modulating current is 40mA. The pattern generator was AC terminated. Therefore the current is ON and OFF states is 90mA and 50mA respectively. Threshold current is 9.3mA. Therefore the extinction ration should be about 3dB. The eye diagram of the standalone module under these drive conditions is shown in Fig. 5 with the measured extinction ratio of 2.9dB.

Some variation in the ON and OFF state optical signal amplitude is caused not by the relaxation oscillations but by variations in the electrical drive signal. We also performed the time-resolved spectra (TRS) measurement of the module under the above driving conditions without any wavelength stabilization and filtering. Shown in Fig. 6 are the optical power and instantaneous wavelength variation (chirp) as functions of time. Because both OFF and ON state are well above threshold, no relaxation oscillations are observed and hence the dynamic chip is small. The adiabatic chirp is about 1 Angstrom, which is in a good agreement with measured FM< efficiency of 220MHzmA performed in a small-signal experiments. ON-state chirp is about 0.1 Angstrom and is caused by residual amplitude fluctuation of the ON-state power level.

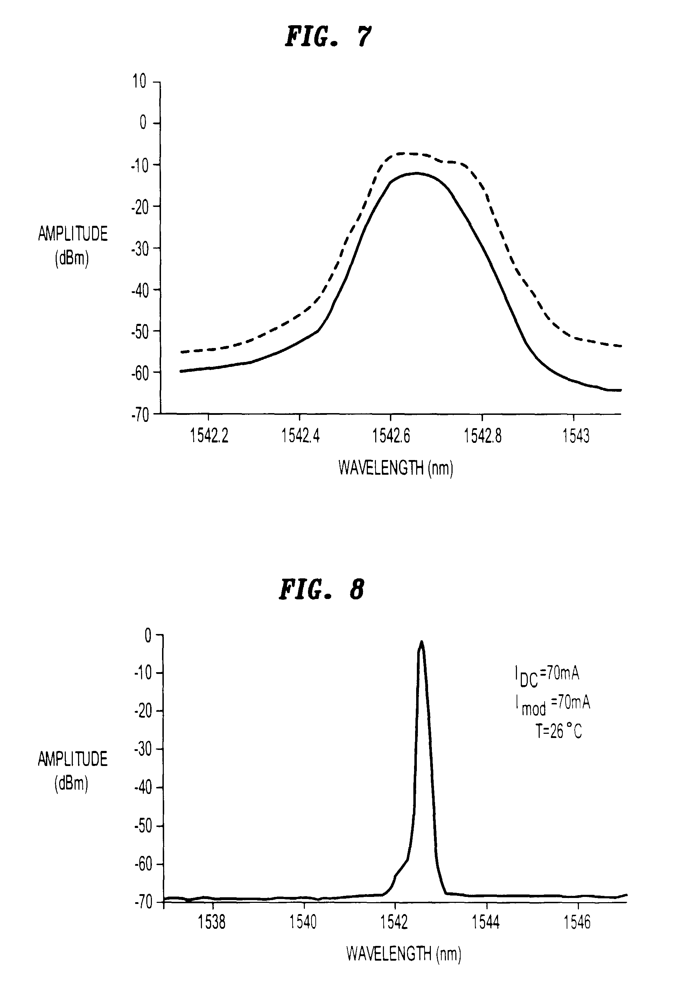

Under digital modulation, amplitude modulation is accompanied by frequency modulation due to the adiabatic chirp. Fig. 7 shows the optical spectrum of the laser under 2.5Gb/s modulation. The dashed line is with filtering. The solid line without. The time-averaged optical spectrum has two maxima corresponding to ON and OFF states (dashed line). Due to the limited spectrometer resolution (1 Angstrom) this splitting of the maximum is washed out. The ON state has higher optical power and therefore it has higher peak in the spectrum.

When the laser operates in the scheme shown in the Fig. 2 its wavelength is locked to the slope of the reflection spectrum of the fiber grating. Since the optical power in the ON state is higher than in the OFF state, locking occurs at the wavelength close to the ON state peak. Under these conditions the high-energy (shorter wavelength) part of the laser spectrum is transmitted into the output (port 3 of the circulator), while the low-energy (longer wavelength) is not. Therefore the signal in OFF state corresponding to longer wavelength part of the spectrum is filtered out. This results in two effects: reduction of the wavelength chirp and increase of the extinction ratio.

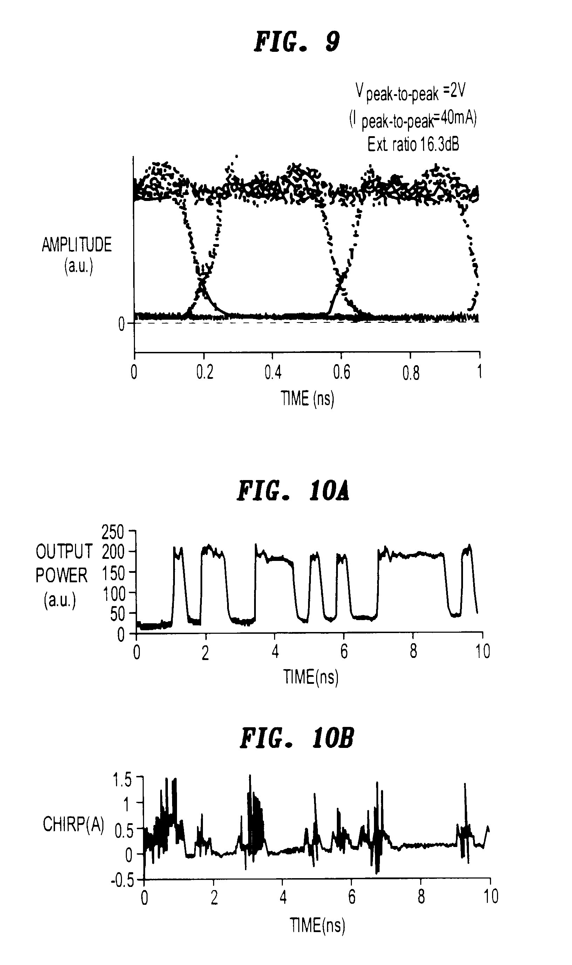

The same set of measurements were performed with the module connected in a scheme shown in the Fig. 2. Fig. 9 shows the eye diagram under the same electrical modulation conditions as in Fig. 5, but with spectral filtering. The extinction ratio has improved substantially. Some noise in the ON level corresponds to the ON-state chirp transformed into amplitude variation by the fiber grating. This effect can be reduced by improving the electrical signal quality and using a better fiber grating as it will be discussed below.

Fig. 10 shows TRS measurements of the module under 2.5Gb/s bit rate modulation after spectral filtering. Increased extinction ratio is clearly seen. The zero level is somewhat increased by the zero level not being subtracted. Very low optical power in the OFF-state makes it difficult to accurately estimate the wavelength in the OFF-state accurately. The averaged ON-OFF chirp is about 0.3-0.5 Angstroms, i.e. 2 to 3 times lower than for the module without spectral filtering. The ON state chirp is about 0.1 Angstroms, the same as for the module without filtering.

This exemplary scheme is especially attractive in optical communications systems employing high speed transmissions, i.e., bit rates of 10Gb/s, or more where high extinction ratio at low drive voltage is a critical parameter. The extinction ratio is determined by the laser wavelength chirp parameter (FM modulation efficiency) and sharpness of the slope of the fiber-grating (FM-AM conversion efficiency). Both parameters can be further increased.

Advantageously the characteristics of the spectrally selective element 140 are chosen to provide chromatic dispersion compensation. In this case the source 9 provides simultaneous wavelength locking of the laser and dispersion compensation, substantially increasing the transmission distance through a dispersive fiber. In this instance, spectral narrowing is advantageous but of secondary importance and the laser can be either directly modulated or modulated by an external modulator.

It is to be understood that the above-described embodiments are illustrative of only a few of the many possible specific embodiments which can represent applications of the principles of the invention.

## Claims

1. An optical communications system comprising an optical source (10), an optical receiver (12) and an optical transmission path (11) between the source and the receiver, CHARACTERISED IN THAT:
said optical source comprises a controllable wavelength laser (13, 130) whose wavelength can be adjusted by an electrical signal. a spectrally selective element (14, 140) for receiving the optical output of said laser and separating said output into a first component within a selected spectral region and a second component spectrally outside the selected region, optical circuitry (16, 161-163) for directing the output of the laser to the selective element and for directing the first component of the element output to the transmission path, and electrical circuitry (15, 151-153) for detecting the first and second components of the element output and providing a feedback signal based thereon to the laser,
whereby said laser is adjusted to provide reduced chirp, increased extinction ratio and enhanced wavelength stability.

2. The system of claim 1 wherein said spectrally selective element comprises a Bragg grating (140).

3. The system of claim 1 or claim 2 wherein said optical circuitry comprises an optical circulator (161).

4. The system of any of the preceding claims wherein said electrical circuitry comprises a differential amplifier (153).

5. The system of any of the preceding claims wherein said laser comprises a semiconductor laser.

6. The system of any of the preceding claims wherein said laser is a directly modulated laser.

7. The system of claim 1 wherein said spectrally selective element comprises an optical fiber Bragg grating (140), said optical circuitry comprises an optical circulator (161) for directing the output of said laser to said Bragg grating and directing the first component from said Bragg grating to said transmission path, and said electrical circuitry comprises photodetectors (151, 152) for detecting said first and second components.

8. The system of any of the preceding claims wherein said optical circuitry further comprises an optical coupler (162) for coupling a portion of said first component for detection by said electrical circuitry.

9. The system of any of the preceding claims wherein said optical circuitry further comprises an optical attenuator (163) for attenuating said second component for detection by said electrical circuitry.

10. The system of any of the preceding claims wherein said electrical circuitry comprises a differential amplifier (153) for providing a feedback signal in proportion to the detected difference between said first component and said second component.

11. The system of any of the preceding claims wherein said transmission path exhibits chromatic dispersion and said spectrally selective element compensates such dispersion.
